# EUROPÄISCHE PATENTSCHRIFT

(11) **EP 0 425 854 B1**
(45) Veröffentlichungstag und Bekanntmachung des Hinweises auf die Patenterteilung: **26.01.1994**
(21) Anmeldenummer: 90119438.1
(22) Anmeldetag: 10.10.1990
(51) Int. Cl.: G01G 21/24, G01G 3/12, G01G 23/02, G01G 23/00

(54) **Oberschalige elektronische Waage mit Parallelführung**
Top-pan electronic scale with guides for parallel motion
Balance électronique à plat en haut avec guides pour déplacement parallèle

(30) Priorität: 02.11.1989 DE 3936364
(43) Veröffentlichungstag der Anmeldung: 08.05.1991
(73) Patentinhaber: SARTORIUS AG, 37075 Göttingen (DE)
(72) Erfinder: Stadler, Eberhard, W-3400 Göttingen (DE); Eger, Matthias, W-3400 Göttingen (DE)
(74) Vertreter: Köhler, Rudolf

(56) Entgegenhaltungen:
- DE-A- 3 003 862
- DE-A- 3 530 169
- DE-A- 3 832 747
- US-A- 4 401 173

## Beschreibung

Die Erfindung betrifft eine oberschalige elektronische Waage mit Parallelführung der Lastschale durch vier im Randbereich eines Gehäuses oder Rahmens in gegenüberliegenden Positionen angeordneten Parallelführungselementen mit Wegbegrenzung, die durch Verbindungsglieder zur Kraftübertragung mit einem weglosen oder wegarmen Meßwertaufnehmer verbunden sind.

Des weiteren bezieht sich die Erfindung im besonderen auf eine oberschalige elektronische Waage mit einem gehäusefesten Systemträger, mit einem Lastaufnehmer, mit zwei Lenkern, die als Parallelführung den Lastaufnehmer in senkrechter Richtung beweglich mit dem Systemträger verbinden, mit vier vorkragenden Armen, die am Lastaufnehmer befestigt sind und an ihren Enden Auflagepunkte für eine Waagschale tragen, und mit einem wegarmen Meßwertaufnehmer, der von der auf die Waagschale einwirkenden Gewichtskraft direkt oder unter Zwischenschaltung eines Übersetzungshebels beaufschlagt wird.

Waagen dieser Art sind z.B. aus der US-PS 4 813 505 bekannt. Die Ecklastjustierung dieser Waagen erfolgt im allgemeinen durch Materialabtrag im Bereich der Lenkergelenkstellen oder durch mechanische Verstellelemente, die die Höhe mindestens einer der Lenkergelenkstellen verändern. Diese Ecklastjustierung ist aufwendig in der Fertigung; im Falle des Materialabtrages besteht zusätzlich die Gefahr, daß versehentlich zuviel Material abgetragen wird, was sich nur schwer wieder korrigieren läßt.

Weiter ist es aus der US-PS 4 150 729 bekannt, die Waagschale auf vier Parallelführungen, die jeweils einstückig ausgebildet sind, abzustützen und jeweils zwischen den Parallelführungslenkern einen Biegebalken mit je vier Dehnungsmeßstreifen als Meßwertaufnehmer vorzusehen. Die Ecklastjustierung erfolgt dabei ebenfalls durch Materialabtrag, so daß sich die gleichen o.a. Nachteile ergeben.

Weiter ist es aus der EP 0 332 213 bekannt, bei einer Plattformwaage in den vier Ecken parallelgeführte Kraftübertragungsglieder anzuordnen und jeweils zwei Kraftübertragungsglieder miteinander und mit einem Übertragungshebel zu verbinden. Die Ecklastjustierung erfolgt hierbei durch Verändern der Höhe einer der Lenkergelenkstellen in jedem Kraftübertragungsglied, wodurch sich ebenfalls ein merklicher Fertigungs- und Justieraufwand ergibt.

Weiter ist es aus der DE-PS 30 03 862 und der EP 055 633 bekannt, die mechanische Ecklastjustierung durch einen Ecklastsensor und eine elektronische Ecklastkorrektur zu ersetzen. Konstruktive Ausführungsformen sind dort aber nur für Waagschalen mit einer zentralen Halterung gezeigt.

Aufgabe der Erfindung ist es nun, eine Waage der eingangs genannten Art so weiterzubilden, daß der Aufwand für die Ecklastjustierung verringert wird und daß gleichzeitig die Möglichkeit für eine zusätzliche Überlastsicherung geschaffen wird.

Bei einer oberschaligen elektronischen Waage mit Parallelführung der Lastschale durch vier im Randbereich eines Gehäuses oder Rahmens in gegenüberliegenden Positionen angeordneten Parallelführungselementen mit Wegbegrenzung, die durch Verbindungsglieder zur Kraftübertragung mit einem wegarmen Meßwertaufnehmer verbunden sind, wird diese Aufgabe erfindungsgemäß dadurch gelöst, daß jedem Parallelführungselement mindestens ein Dehnungsmeßstreifen zugeordnet ist und diese Dehnungsmeßstreifen zu einer Brückenschaltung verschaltet sind und daß die Ausgangssignale der Brückenschaltung mit vorgebbarer Bewertung dem Ausgangssignal des Meßwertaufnehmers zugeführt werden.

Eine erste bevorzugte Ausführungsform besteht darin, daß von einer Waage nach der US-PS 4 813 505 bzw. dem deutschen Gebrauchsmuster 88 12 196 ausgegangen wird, bei der die vorkragenden Arme des Systemträgers vor ihren Enden eine mittige Ausnehmung aufweisen, so daß ein oberer und ein unterer Steg stehenbleiben und eine Parallelführung für den jeweiligen Auflagepunkt der Waagschale bilden, daß jedem der vier Auflagepunkte der Waagschale ein Dehnungsmeßstreifen zugeordnet ist, der sich auf einem der zugehörigen Stege befindet, daß diese vier Dehnungsmeßstreifen so auf den Stegen angeordnet sind, daß sie bei etwa mittiger Belastung der Waagschale alle gedehnt oder alle gestaucht werden, daß diese vier Dehnungsmeßstreifen zu zwei Halbbrücken verschaltet sind und daß die Ausgangssignale der beiden Halbbrücken mit vorgebbaren Bewertungen dem Ausgangssignal des Meßwertaufnehmers hinzuaddiert werden.

In einer zweiten bevorzugten Variante wird dies dadurch erreicht, daß die vorkragenden Arme vor ihren Enden eine mittige Ausnehmung aufweisen, so daß ein oberer und ein unterer Steg stehenbleiben und eine Parallelführung für den jeweiligen Auflagepunkt der Waagschale bilden, daß jedem der vier Auflagepunkte der Waagschale zwei Dehnungsmeßstreifen zugeordnet sind, die sich auf einem der zugehörigen Stege befinden, daß diese acht Dehnungsmeßstreifen so auf den Stegen angeordnet sind, daß sie bei etwa mittiger Belastung der Waagschale alle gedehnt oder alle gestaucht werden, daß diese acht Dehnungsmeßstreifen zu zwei Vollbrücken verschaltet sind und daß die Ausgangssignale der beiden Vollbrücken mit vorgebbaren Bewertungen dem Ausgangssignal des Meßwertaufnehmers hinzuaddiert werden.

Die sowieso vorhandenen vier vorkragenden Arme zur Aufnahme der Waagschale werden also durch das Einfügen der mittigen Ausnehmung und der Dehnungsmeßstreifen zu einem Ecklastsensor ausgebaut. Der Aufwand für die Dehnungsmeßstreifen wird dadurch minimiert, daß die Dehnungsmeßstreifen nur in einer Belastungsrichtung benutzt werden, auf die üblichen zusätzlichen Dehnungsmeßstreifen, die in entgegengesetzter Belastungsrichtung benutzt werden, also verzichtet wird.

Die sich durch die vorgeschlagene Konstruktion ergebende Nachgiebigkeit der vorkragenden Arme kann gleichzeitig als federnde Überlastsicherung benutzt werden, ohne das es zusätzlicher mechanischer Bauteile bedarf. Dadurch erfüllen die vorkragenden Arme sowohl die Funktion des Waagschalenträgers als auch die Funktion des Ecklastsensors als auch die Funktion der Überlastsicherung.

Vorteilhafte Ausgestaltungen und Weiterbildungen ergeben sich aus den Unteransprüchen.

Die Erfindung wird im folgenden anhand der schematischen Figuren beschrieben. Dabei zeigt:
- Fig. 1: eine Aufsicht auf das Wägesystem,
- Fig. 2: eine Seitenansicht einer Quertraverse mit zwei Auflagepunkten für die Waagschale,
- Fig. 3: die elektrische Schaltung in einer ersten Ausführungsform,
- Fig. 4: die elektrische Schaltung in einer zweiten Ausführungsform,
- Fig. 5: eine Seitenansicht einer Quertraverse in einer zweiten Ausführungsform und
- Fig. 6: einen Schnitt durch das Gehäuse und den Auflagepunkt für die Waagschale in der Ausführungsform gemäß Fig. 5.

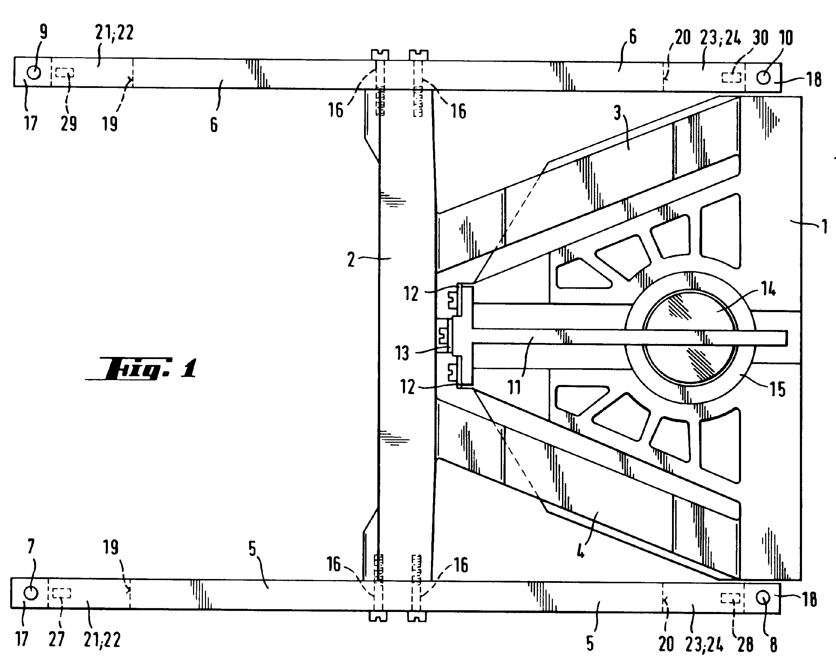

Das in Fig. 1 in Aufsicht gezeigte Wägesystem besteht aus einem gehäusefesten Systemträger 1, an dem zwei obere Lenkerarme 3 und 4 befestigt sind. Die anderen Enden der oberen Lenkerarme 3 und 4 sind mit einem Lastaufnehmer 2 verbunden. Die beiden Lenkerarme 3 und 4 bilden zusammen den oberen Lenker. In gleicher Weise verbinden zwei in der Aufsicht nicht erkennbare untere Lenkerarme den Lastaufnehmer 2 mit dem Systemträger 1. Auf diese Weise entsteht in bekannter Weise eine Parallelführung für den Lastaufnehmer 2. Seitlich am Lastaufnehmer 2 sind vier vorkragende Arme 5 und 6 befestigt, wobei jeweils zwei vorkragende Arme zu einer Quertraverse zusammengefaßt sind. Die vorkragenden Arme 5 und 6 tragen an ihren Enden vier Auflagepunkte 7,8,9,10 für die - nicht gezeichnete - Waagschale. Diese Quertraversen werden im folgenden noch genauer beschrieben. Weiter erkennt man in Fig. 1 einen Übersetzungshebel 11, der mit Federgelenken 12 am Systemträger 1 schwenkbar gelagert ist. Der Übersetzungshebel 11 stellt einen zweiarmigen Hebel dar: Der kürzere Hebelarm von einigen Millimetern reicht bis zum Koppelelement 13, das die auf den Lastaufnehmer 2 über die Waagschalenauflagepunkte 7,8,9,10 und die vorkragenden Arme 5 und 6 ausgeübten Gewichtskräfte des Wägegutes gelenkig auf den Übersetzungshebel 11 überträgt; der längere Hebelarm reicht bis zur Spule 14, die sich im Luftspalt eines Permanentmagneten 15 befindet und bei Stromfluß die Gegenkraft erzeugt. Diese Gegenkraft wird bei Waagen nach dem Prinzip der elektromagnetischen Kraftkompensation in bekannter Weise durch einen Lagensensor so geregelt, daß sich genau ein Gleichgewicht mit der Gewichtskraft des Wägegutes einstellt.

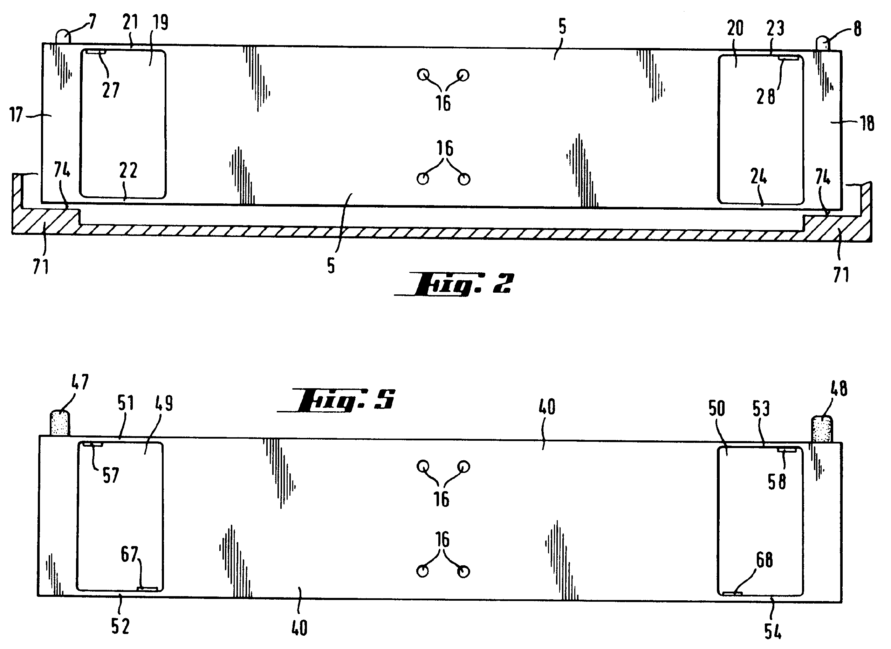

Die Quertraverse, die die beiden vorkragenden Arme 5 bildet, ist in Fig. 2 in Seitenansicht dargestellt. Zur Befestigung am Lastaufnehmer 2 sind vier Löcher 16 vorhanden. Kurz vor dem Ende 17 der Quertraverse mit dem Auflagepunkt 7 für die Waagschale befindet sich eine Ausnehmung 19, die so groß ist, daß oben und unten jeweils nur ein relativ dünner Steg 21 bzw. 22 stehenbleibt. Diese beiden Stege 21 und 22 bilden eine Parallelführung für den Endteil 17 und damit für den Auflagepunkt 7 für die Waagschale. Die Dicke der beiden Stege 21 und 22 ist so bemessen, daß sich bei Höchstlast auf der Waagschale eine geringe Einfederung des Auflagepunktes 7 von z.B. 1 mm ergibt. Die dabei entstehende Dehnung an der Unterseite des Steges 21 wird durch einen Dehnungsmeßstreifen 27 in ein elektrisches Signal umgewandelt. - In entsprechender Weise ist die in Fig. 2 rechts gelegene Seite der Quertraverse aufgebaut: Kurz vor dem Ende 18, das den Auflagepunkt 8 für die Waagschale trägt, sind durch die Ausnehmung 20 die beiden Stege 23 und 24 erzeugt, wobei der Steg 23 auf der Unterseite einen Dehnungsmeßstreifen 28 trägt. Die Quertraverse kann entweder aus einem etwa 10 mm starken Blech ausgefräst oder mittels Laser ausgeschnitten oder aber durch Druckguß hergestellt sein.

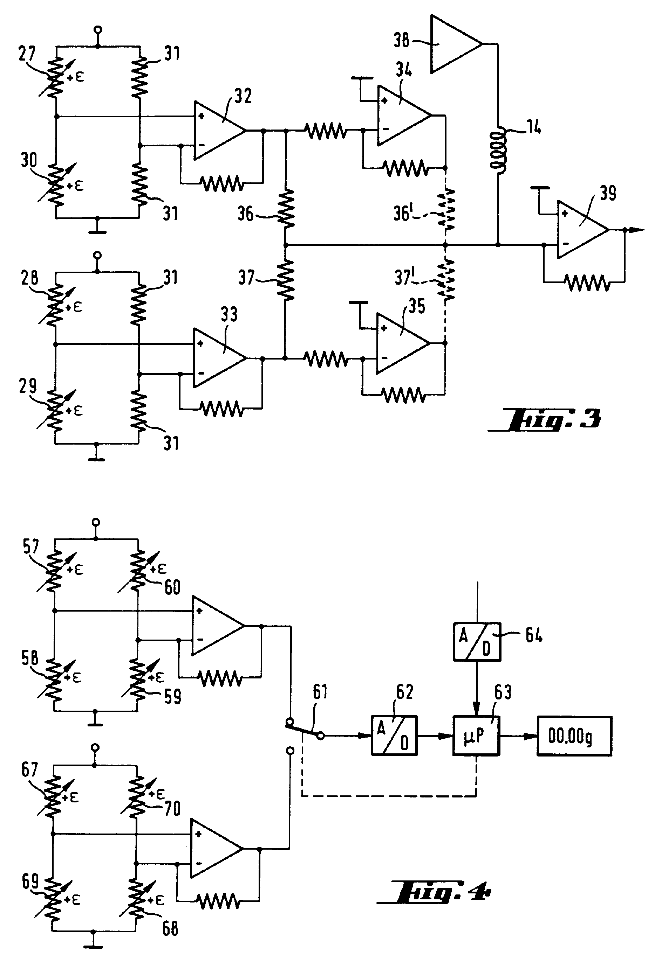

Die Quertraverse, die die beiden vorkragenden Arme 6 bildet, ist genauso gebaut wie die Quertraverse, die die beiden vorkragenden Arme 5 bildet. Der in der Nähe des Auflagepunktes 9 für die Waagschale an dem oberen Steg befestigte Dehnungsmeßstreifen ist in der Schaltung (Fig. 3) mit 29 bezeichnet, der Dehnungsmeßstreifen in der Nähe des Auflagepunktes 10 ist mit 30 bezeichnet.

Alle vier Dehnungsmeßstreifen 27,28,29,30 befinden sich an Stellen, die bei mittiger Lage des Wägegutes in gleicher Weise gedehnt werden. Werden daher je zwei Dehnungsmeßstreifen, die sich unter gegenüberliegenden Ecken der Waagschale befinden, zu einer Halbbrücke zusammengeschaltet und durch zwei untereinander gleiche Festwiderstände 31 zu einer Vollbrücke ergänzt, wie es in Fig. 3 gezeigt ist, so ist das Ausgangssignal beider Brückenschaltungen bei mittiger Lage des Wägegutes Null. Befindet sich das Wägegut jedoch beispielsweise näher am Auflagepunkt 10, so wird der darunterliegende Dehnungsmeßstreifen 30 stärker gedehnt, während der gegenüberliegende Dehnungsmeßstreifen 27 unter dem Auflagepunkt 7 geringer gedehnt wird. Dadurch entsteht ein Differenzsignal am Brückenausgang, das vom Verstärker 32 verstärkt wird. Dieses Signal ist also proportional zur Entfernung des Wägegutes von der Mitte der Waagschale und zwar in Richtung der Diagonalen vom Auflagepunkt 7 zum Auflagepunkt 10. - In entsprechender Weise ist das Ausgangss ignal der zweiten Brückenschaltung mit den Dehnungsmeßstreifen 28 und 29 proportional zur Entfernung des Wägegutes von der Mitte der Waagschale in Richtung der Diagonalen vom Auflagepunkt 8 zum Auflagepunkt 9.

Dieses ecklastproportionale Signal kann nun mit vorgebbaren Bewertungen zum Ausgangssignal des Meßwertaufnehmers hinzuaddiert werden. In Fig. 3 stellt der Strom durch die Spule 14, der vom Regelverstärker 38 geliefert wird, das Ausgangssignal des Meßwertaufnehmers dar. Dieser Strom wird dem Eingangsverstärker 39 des Analog/Digital-Wandlers zugeführt, der als Stromsenke geschaltet ist. Diesem Strom wird über Bewertungswiderstände 36 und 37 ein kleiner zusätzlicher Korrekturstrom hinzuaddiert, der die Ecklastfehler der Waage korrigiert. Je nach Größe des Ecklastfehlers in den beiden Diagonalrichtungen der Waagschale werden die Widerstände 36 und 37 entsprechend groß gewählt. Bei einer Waage, die in einer Richtung zum Beispiel keinen Ecklastfehler zeigt, wird der entsprechende Bewertungswiderstand unendlich. Je nach Vorzeichen des Ecklastfehlers wird entweder ein Bewertungswiderstand 36 bzw. 37 an den Ausgang des Verstärkers 32 bzw. 33 angeschlossen oder ein Bewertungswiderstand 36' bzw. 37' an den Ausgang des Inverters 34 bzw. 35 (in Fig. 3 gestrichelt eingezeichnet). Nach der Montage und Inbetriebnahme der Waage wird dann ohne Bewertungswiderstände 36,37,36' und 37' die Ecklastabhängigkeit der Waage in beiden Richtungen gemessen, danach die erforderlichen Bewertungswiderstände 36 und 37 berechnet und eingebaut und die richtige Ecklastkorrektur kontrolliert.

Die in Fig. 3 gezeigte Schaltung ist selbstverständlich nur ein Beispiel, wie ein vorgebbarer Bruchteil des Ecklastsignals zum Ausgangssignal des Meßwertaufnehmers addiert werden kann. Beispielsweise kann auch ein Potentiometer zwischen dem Ausgang des Verstärkers 32 und dem Ausgang des Inverters 34 geschaltet werden, an dem die Größe der elektrischen Ecklastkorrektur stufenlos einstellbar ist.

Die im vorstehenden beschriebene Anordnung der Dehnungsmeßstreifen an Stellen, die unter Belastung alle eine Dehnung oder alle eine Stauchung erleiden, und die Verschaltung zu zwei Halbbrücken ergibt zwar nur ein kleineres Signal als Schaltungen, bei denen zusätzliche Dehnungsmeßstreifen mit entgegengesetzter Belastungsrichtung eingesetzt werden, sie vermindert aber den Dehnungsmeßstreifen-Aufwand auf die Hälfte. Da die Ecklastfehler üblicher Parallelführungen einige 100 Digit im allgemeinen nicht überschreiten, genügt die erzielbare Auflösung dieser vereinfachten Schaltung.

In Fig. 2 ist weiterhin bruchstückhaft das Gehäuse 71 angedeutet. Das Wägesystem ist so in das Gehäuse eingebaut, daß sich die Endteile 17 und 18 in geringem Abstand über der Gehäusegrundplatte befinden. Im Falle einer Überlastung der Waage stützen sich die Endteile 17 und 18 auf Anschlägen 74 an der Gehäusegrundplatte ab und leiten so die Überlast in das Gehäuse ab. Zusätzlich zu diesem mechanischen Überlastschutz kann auch in der Elektronik in Fig. 3 an den Ausgängen der Verstärker 32,33,34 und 35 je ein (nicht gezeichneter) Grenzwertdetektor angeschlossen sein, der z.B. in der Anzeige ein Symbol für zu ausmittige Lage des Wägegutes ansteuert.

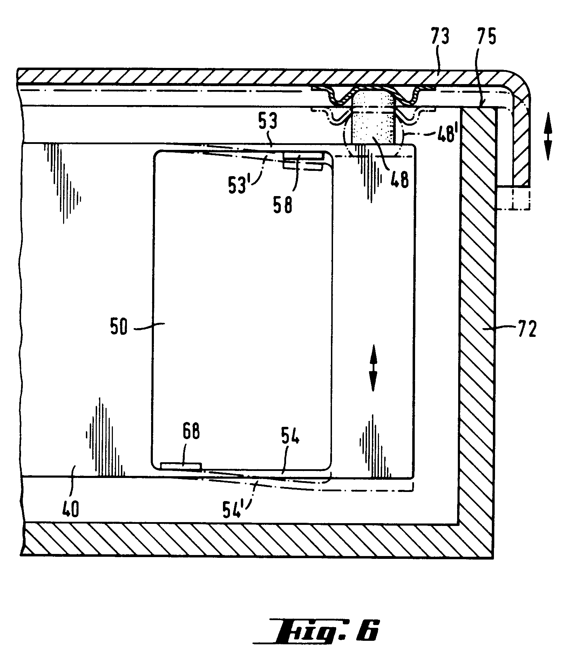

Eine zweite Ausgestaltung der elektrischen Ecklastkorrektur ist schaltungsmäßig in Fig. 4 dargestellt, die zu dieser Ausgestaltung gehörige Quertraverse, die die beiden vorkragenden Arme 40 bildet, in Fig. 5. Diese Quertraverse ist ähnlich aufgebaut wie die Quertraverse in Fig. 2, trägt jedoch an den durch Ausnehmungen 49 und 50 gebildeten Stegen 51,52,53 und 54 insgesamt vier Dehnungsmeßstreifen, die bei Belastung gleichen Dehnungen ausgesetzt sind. Zum Auflagepunkt 47 der Waagschale gehören die Dehnungsmeßstreifen 57 und 67, zum Auflagepunkt 48 die Dehnungsmeßstreifen 58 und 68. Der mechanische Teil dieser zweiten Ausgestaltung entspricht ansonsten dem mechanischen Teil der ersten Ausgestaltung gemäß Fig. 1. Die insgesamt acht Dehnungsmeßstreifen sind gemäß Fig. 4 zu zwei Vollbrücken verschaltet. Die Lage der Dehnungsmeßstreifen 57,58,67 und 68 ist dabei aus Fig. 5 erkennbar, die anderen vier Dehnungsmeßstreifen befinden sich auf der zweiten Querstrebe und zwar die beiden Dehnungsmeßstreifen 59 und 69 unterhalb des in Fig. 1 mit 9 bezeichneten Auflagepunktes der Waagschale und die beiden Dehnungsmeßstreifen 60 und 70 unterhalb des in Fig. 1 mit 10 bezeichneten Auflagepunktes. Die in Fig. 4 oben gezeichnete Brückenschaltung aus den Dehnungsmeßstreifen 57,58,59 und 60 gibt also ein Signal ab, wenn z.B. die Dehnungsmeßstreifen 57 und 59 stärker gedehnt werden als die Dehnungsmeßstreifen 58 und 60, wenn also die Last in Fig. 1 mehr auf der linken Seite der Waagschale liegt. Liegt die Last dagegen mehr auf der Seite der Quertraverse, die in Fig. 1 die vorkragenden Arme 5 bildet, so werden die beiden Dehnungsmeßstreifen 57 und 58 stärker, aber gleich gedehnt, während die beiden Dehnungsmeßstreifen 59 und 60 geringer, aber ebenfalls gleich gedehnt werden; die Brückenschaltung gibt also kein Ausgangssignal. Diese Brückenschaltung reagiert also nur auf eine Lastverschiebung auf der Waagschale in der Richtung links/rechts in Fig. 1. - In entsprechender Weise reagiert die untere Brückenschaltung in Fig. 4 mit den Dehnungsmeßstreifen 67, 68,69,70 auf Verschiebungen der Last auf der Waagschale in der Richtung vorn/hinten in Fig. 1. Diese beiden Ecklastsignale werden in Fig. 4 durch einen Multiplexer 61 abwechselnd einem Analog/Digital-Wandler 62 zugeführt und digital an den Mikroprozessor 63 weitergegeben. Der Mikroprozessor 63 steuert den Multiplexer 61, so das er die Digitalsignale den beiden Brückenschaltungen und damit den beiden Richtungen auf der Waagschale zuordnen kann. Der Mikroprozessor 63 erhält weiterhin vom Analog/ Digital-Wandler 64 das digitalisierte Signal des Meßwertaufnehmers. Im Mikroprozessor kann dann mit bekannten Rechenroutinen zum Signal des Meßwertaufnehmers ein vorgegebener Bruchteil der beiden Ecklastsignale hinzuaddiert werden. Die vorgegebenen Bruchteile sind in Form zweier Ecklast-Korrekturfaktoren im Speicher des Mikroprozessors 63 digital abgespeichert. Diese werden nach der Inbetriebnahme der Waage genauso ermittelt wie die Bewertungswiderstände in der ersten Ausgestaltung. Bei einer Waage z . B., die in einer Richtung keinen Ecklastfehler zeigt, ist der zugehörige Ecklast-Korrekturfaktor Null.

Diese zweite Ausgestaltung erlaubt durch die doppelte Anzahl der Dehnungsmeßstreifen eine Ecklastmessung parallel zu den Kanten der Waagschale, was für manche Zwecke vorteilhaft ist. Weiter erlaubt die digitale Berechnung der Ecklastkorrektur auch eine nichtlineare Abhängigkeit des Ecklastfehlers zu korrigieren. Dazu müssen nur zusätzlich zum (linearen) Korrekturfaktor weitere Korrekturkoeffizienten für quadratische, kubische und gegebenenfalls weitere Potenzen des Ecklastsignals abgespeichert und rechnerisch berücksichtigt werden.

Selbstverständlich kann auch die in der ersten Ausgestaltung beschriebene Schaltung mit zwei Halbbrücken kombiniert werden mit der Analog/Digital-Wandlung und digitalen Verrechnung gemäß der zweiten Ausgestaltung. Genauso kann die Schaltung mit zwei Vollbrücken gemäß der zweiten Ausgestaltung kombiniert werden mit der analog elektrischen Korrektur über Bewertungswiderstände gemäß der ersten Ausgestaltung.

Die Auflagepunkte 47 und 48 für die Waagschale sind in Fig. 5 als Gummipuffer gezeichnet. Sie sollen Stöße auf die Waagschale dämpfen und zusätzlich einen Überlastschutz darstellen, wie aus der Detailzeichnung in Fig. 6 zu ersehen ist. Im Falle einer Überlast auf der Waagschale 73 werden die den Auflagepunkt 48 bildenden Gummipuffer soweit zusammengedrückt, bis die Waagschale 73 auf der Oberkante 75 des Gehäuses 72 aufliegt. Dieser Überlast-Zustand mit zusammengedrückten Gummipuffern 48' und elastisch durchgebogenen Stegen 53' und 54' ist in Fig. 6 gestrichelt angedeutet. Die Nachgiebigkeit der Gummipuffer, die Nachgiebigkeit der Stege 53 und 54 und der freie Abstand zwischen Waagschale 73 und Gehäuseoberkante 75 sind so aufeinander abgestimmt, daß die Waagschale erst bei Überschreiten des Wägebereiches auf der Gehäuseoberkante 75 aufliegt.

## Patentansprüche

1. Oberschalige elektronische Waage mit Parallelführung der Lastschale durch vier im Randbereich eines Gehäuses oder Rahmens in gegenüberliegenden Positionen angeordnete Parallelführungselemente mit Wegbegrenzung, die durch Verbindungsglieder zur Kraftübertragung mit einem wegarmen Meßwertaufnehmer verbunden sind, dadurch gekennzeichnet, daß jedem Parallelführungselement (5,6;40) mindestens ein Dehnungsmeßstreifen zugeordnet ist und diese Dehnungsmeßstreifen (27 bis 30 bzw. 57 bis 70) zu einer Brückenschaltung verschaltet sind und daß die Ausgangssignale der Brückenschaltung mit vorgebbarer Bewertung dem Ausgangssignal des Meßwertaufnehmers (14, 15) zugeführt werden.

2. Oberschalige elektronische Waage mit einem gehäusefesten Systemträger (1), mit einem Lastaufnehmer (2), mit zwei Lenkern (3/4), die als Parallelführung den Lastaufnehmer in senkrechter Richtung beweglich mit dem Systemträger verbinden, mit vier vorkragenden Armen (5,6;40), am Lastaufnehmer befestigt sind und an ihren Enden Auflagepunkte (7,8,9,10;47,48) für eine Waagschale tragen, und mit einem wegarmen Meßwertaufnehmer (14,15) der von der auf die Waagschale einwirkenden Gewichtskraft direkt oder unter Zwischenschaltung eines Übersetzungshebels 11) beaufschlagt wird, dadurch gekennzeichnet, daß die vorkragenden Arme (5,6) vor ihren Enden (17,18) eine mittige Ausnehmung (19,20) aufweisen, so das ein oberer (21,23) und ein unterer (22,24) Steg stehenbleiben und eine Parallelführung für den jeweiligen Auflagepunkt 20,8,9, 10) der Waagschale bilden, das jedem der vier Auflagepunkte (7,8,9,10) der Waagschale ein Dehnungsmeßstreifen (27,28,29,30) zugeordnet ist, der sich auf einem der zugehörigen Stege (21,23) befindet, daß diese vier Dehnungsmeßstreifen (27,28,29,30) so auf den Stegen (21,23) angeordnet sind, das sie bei etwa mittiger Belastung der Waagschale alle gedehnt oder alle gestaucht werden, daß diese vier Dehnungsmeßstreifen (27,28,29,30) zu zwei Halbbrücken verschaltet sind und daß die Ausangssignale der beiden Halbbrücken mit vorgebbaren Bewertungen dem Ausgangssignal des Meßwertaufnehmers (14, 15) hinzuaddiert werden.

3. Oberschalige elektronische Waage nach dem Oberbegriff des Anspruches 2, dadurch gekennzeichnet, daß die vorkragenden Arme (40) vor ihren Enden eine mittige Ausnehmung (49,50) aufweisen, so daß ein oberer (51,53) und ein unterer (52,54) Steg stehenbleiben und eine Parallelführung für den jeweiligen Auflagepunkt (47,48) der Waagschale bilden, daß jedem der vier Auflagepunkte (47, 48) der Waagschale zwei Dehnungsmeßstreifen (57,58,59, 60,67,68,69,70) zugeordnet sind, die sich auf einem der zugehörigen Stege (51,52,53,54) befinden, daß diese acht Dehnungsmeßstreifen (57,58,59,60,67,68,69,70) so auf den Stegen (51,52,53,54) angeordnet sind, daß sie bei etwa mittiger Belastung der Waagschale alle gedehnt oder alle gestaucht werden, daß diese acht Dehnungsmeßstreifen (57,58,59,60,67,68,69,70) zu zwei Vollbrücken verschaltet sind und daß die Ausgangssignale der beiden Vollbrücken mit vorgebbaren Bewertungen dem Ausgangssignal des Meßwertaufnehmers (14,15) hinzuaddiert werden.

4. Oberschalige elektronische Waage nach einem der Ansprüche 1 bis 3, dadurch gekennzeichnet, daß die vorgebbaren Bewertungen durch Bewertungswiderstände (36,37, 36',37') erfolgen.

5. Oberschalige elektronische Waage nach einem der Ansprüche 1 bis 3, dadurch gekennzeichnet, daß die Ausgangssignale der beiden Brückenschaltungen digitalisiert und einem Mikroprozessor (63) zugeführt werden und daß die vorgebbaren Bewertungen als Bewertungsfaktoren im Mikroprozesor (63) gespeichert sind.

6. Oberschalige elektronische Waage nach Anspruch 5, dadurch gekennzeichnet, daß die Bewertung nichtlinear erfolgt.

7. Oberschalige elektronische Waage nach einem der Ansprüche 2 bis 6, dadurch gekennzeichnet, daß je zwei vorkragende Arme (5,6,40) zu einer Quertraverse zusammengefaßt sind.

8. Oberschalige elektronische Waage nach einem der Ansprüche 2 bis 7, dadurch gekennzeichnet, daß die Auflagepunkte (47,48) für die Waagschale an den Enden der vorkragenden Arme (40) durch Gummipuffer gebildet werden.

9. Oberschalige elektronische Waage nach einem der Ansprüche 1 bis 8, dadurch gekennzeichnet, daß am Gehäuse (71,72) Überlastanschläge (74,75) vorgesehen sind, die Wegbegrenzer für die Parallelführungselemente bilden.

10. Oberschalige elektronische Waage nach einem der Ansprüche 1 bis 9, dadurch gekennzeichnet, daß aus den Ausgangssignalen der Brückenschaltungen Überlastsignale abgeleitet werden.

## Claims

1. Upper pan electronic weighing machine with parallel guidance of the load pan by four parallel guidance elements, which are arranged in oppositely disposed positions in the rim region of a housing or frame, are connected with a low-travel measurement value pick-up for force transmission by connecting members and which are limited in travel, characterised thereby, that each parallel guidance element (5, 6; 40) is associated with at least one wire strain gauge and these wire strain gauges (27 to 30 or 57 to 70) are wired into a bridge circuit and that the output signals of the bridge circuit are fed with presettable weighting to the output signal of the measurement value pick-up (14, 15).

2. Upper pan electronic weighing machine with a system carrier (1) fast with the housing, with a load receiver (2), with two guide rods (3/4), which as parallel guidance connect the load receiver with the system carrier to be movable in vertical direction, with four projecting arms (5, 6; 40), which are fastened at the load receiver and at their ends carry bearing points (7, 8, 9, 10; 47, 48) for a weighing pan, and with a low-travel measurement value pick-up (14, 15), which is acted on directly or with the interposition of a transmission lever (11) by the force of the weight acting on the weighing pan, characterised thereby, that the projecting arms (5, 6) before their ends (17, 18) display a central cut-out (19, 20) so that an upper web (21, 23) and a lower web (22, 24) remain behind and form a parallel guidance for the respective bearing point (20, 8, 9, 10) of the weighing pan, that each of the four bearing points (7, 8, 9, 10) of the weighing pan is associated with a wire strain gauge (27, 28, 29, 30), which is disposed on one of the associated webs (21, 23), that these four wire strain gauges (27, 28, 29, 30) are so arranged on the webs (21, 23) that they are either all extended or all compressed in the case of about central loading of the weighing pan, that these four wire strain gauges (27, 28, 29, 30) are wired into two half bridges and that the output signals of the two half bridges are added with presettable weightings to the output signal of the measurement value pick-up (14, 15).

3. Upper pan electronic weighing machine according to the classifying clause of the claim 2, characterised thereby, that the projecting arms (40) before their ends display a central cut-out (49, 50) so that an upper web (51, 53) and a lower web (52, 54) remain behind and form a parallel guidance for the respective bearing point (47, 48) of the weighing pan, that each of the four bearing points (47, 48) of the weighing pan is associated with two wire strain gauges (57, 58, 59, 60, 67, 68, 69, 70), which are disposed on one of the associated webs (51, 52, 53, 54), that these eight wire strain gauges (57, 58, 59, 60, 67, 68, 69, 70) are so arranged on the webs (51, 52, 53, 54) that they are either all extended or all compressed in the case of about central loading of the weighing pan, that these eight wire strain gauges (57, 58, 59, 60, 67, 68, 69, 70) are wired into two full bridges and that the output signals of the two full bridges are added with presettable weightings to the output signal of the measurement value pick-up (14, 15).

4. Upper pan electronic weighing machine according to one of the claims 1 to 3, characterised thereby, that the- presettable weightings take place through weighting resistors (36, 37, 36', 37').

5. Upper pan electronic weighing machine according to one of the claims 1 to 3, characterised thereby, that the output signals of both the bridge circuits are digitalised and fed to a microprocessor (63) and that the presettable weightings are stored as weighting factors in the microprocessor (63).

6. Upper pan electronic weighing machine according to claim 5, characterised thereby, that the weighting takes place non-linearly.

7. Upper pan electronic weighing machine according to one of the claims 2 to 6, characterised thereby, that each two projecting arms (5, 6, 40) are combined into a crossbeam.

8. Upper pan electronic weighing machine according to one of the claims 2 to 7, characterised thereby, that the bearing points (47, 48) for the weighing pan are formed by rubber buffers at the ends of the projecting arms (40).

9. Upper pan electronic weighing machine according to one of the claims 1 to 8, characterised thereby, that overload abutments (74, 75), which form travel limiters for the parallel guidance elements, are provided at the housing (71, 72).

10. Upper pan electronic weighing machine according to one of the claims 1 to 9, characterised thereby, that overload signals are derived from the output signals of the bridge circuits.

## Revendications

1. Balance électronique à plateau supérieur comportant un mouvement parallèle du plateau de charge par l'intermédiaire de quatre éléments de parallélogramme à course limitée, placés en positions opposées sur le bord d'un bâti ou d'un cadre, lesquels sont, en vue de la transmission de la force, reliés par des raccords à un transducteur à faible débattement, caractérisée en ce que chaque élément de parallélogramme (5,6;40) est associé à au moins une jauge extensométrique et ces extensomètres (27 à 30 ou 57 à 70) sont reliés à un montage en pont et en ce que les signaux de sortie du montant en pont arrivent avec une pondération prédéfinissable au signal de sortie du transducteur (14,15).

2. Balance électronique à plateau supérieur comportant un support de système (1) à bâti fixe, un récepteur de charge (2), deux bras oscillants (3,4), qui, comme un mouvement parallèle, relient, de manière mobile en direction verticale, le récepteur de charge au support de système, quatre bras (5,6;40) faisant saillie, qui sont fixés au récepteur de charge et portent à leurs extrémités des points d'appui (7,8,9,10;47,48) pour un plateau de balance et comportant un transducteur (14,15) à faible débattement, qui peut être chargé, par le poids agissant sur le plateau de la balance, directement ou par l'entremise d'un levier de transmission (11), caractérisée en ce que les bras faisant saillie (5,6) présentent, devant leurs extrémités (17,18) un évidement central (19,20), de manière à immobiliser une traverse supérieure (21,23) et une traverse inférieure (22,24) et à constituer un mouvement parallèle pour chacun des points d'appui (7,8, 9,10) du plateau de balance, en ce que chacun des quatre points d'appui (7,8,9,10) du plateau de balance est associé à un extensomètre (27,28,29,30), qui se situe sur l'une des traverses (21,23) correspondantes, en ce que ces quatre extensomètres (27,28,29,30) sont placés sur les traverses (21, 23) de manière à être tous allongés ou tous comprimés pour une charge moyenne du plateau de balance, en ce que ces quatre extensomètres (27,28,29,30) sont reliés à deux demi-ponts et en ce que les signaux de sortie des deux demi-ponts sont additionnés avec des pondérations prédéfinissables au signal de sortie du transducteur (14,15).

3. Balance électronique à plateau supérieur selon le préambule de la revendication 2, caractérisée en ce que les bras faisant saillie (40) présentent devant leurs extrémités un évidement central (49,50), de manière à immobiliser une traverse supérieure (51,53) et une traverse inférieure (52, 54) et à former un parallélogramme pour chacun des points d'appui (47,48) du plateau de balance, en ce que, à chacun des quatre points d'appui (47,48) de la balance sont associés deux extensomètres (57,58,59,60,67,68,69,70), qui se situent sur l'une des traverses correspondantes (51,52,53,54), en ce que ces huit extensomètres (57,58,59,60,67,68,69,70) sont placés sur les traverses (51,52,53,54), de manière qu'ils soient tous allongés ou tous comprimés pour une charge sensiblement moyenne du plateau de la balance, en ce que ces huits extensomètres (57,58,59,60,67,68,69,70) sont reliés à deux ponts intégraux et en ce que les signaux de sortie des deux ponts intégraux sont additionnés avec des pondérations prédéfinissables au signal de sortie de transducteur (14,15).

4. Balance électronique à plateau supérieur selon l'une des revendications 1 à 3, caractérisée en ce que les pondérations prédéfinissables proviennent des résistances de pondération (36,37,36',37').

5. Balance électronique à plateau supérieur selon l'une des revendications 1 à 3, caractérisée en ce que les signaux de sortie des deux montages en pont sont numérisés et arrivent à un microprocesseur (63) et en ce que les pondérations prédéfinissables sont mises en mémoire comme facteur de pondération dans le microprocesseur (63).

6. Balance électronique à plateau supérieur selon la revendication 5, caractérisée en ce que la pondération s'effectue de manière non linéaire.

7. Balance électronique à plateau supérieur selon l'une des revendications 2 à 6, caractérisée en ce que chaque paire de bras faisant saillie (5,6,40) est regroupée en une barre transversale.

8. Balance électronique à plateau supérieur selon l'une des revendications 2 à 7, caractérisée en ce que les points d'appui (47,48) pour le plateau de balance aux extrémités des bras faisant saillie (40) sont des tampons en caoutchouc.

9. Balance électronique à plateau supérieur selon l'une des revendications 1 à 8, caractérisée en ce que il est prévu sur le bâti (71,72) des butées de surcharge (74,75), qui constituent des limitateurs de course pour les éléments du parallélogramme.

10. Balance électronique à plateau supérieur selon l'une des revendications 1 à 9, caractérisée en ce que, à partir des signaux de sortie des montages en pont sont acheminés des signaux de surcharge.
